# EUROPÄISCHE PATENTSCHRIFT

(11) **EP 1 398 212 B1**
(45) Veröffentlichungstag und Bekanntmachung des Hinweises auf die Patenterteilung: **28.12.2005**
(21) Anmeldenummer: 03020373.1
(22) Anmeldetag: 10.09.2003
(51) Int. Cl.: B60Q 1/14

(54) **Elektrische Schalteinrichtung**
Electrical switching apparatus
Appareil de commutation électrique

(30) Priorität: 12.09.2002 DE 10242253
(43) Veröffentlichungstag der Anmeldung: 17.03.2004
(73) Patentinhaber: Leopold Kostal GmbH & Co. KG, 58507 Lüdenscheid (DE)
(72) Erfinder: Ficek, Wojciech, 58507 Lüdenscheid (DE); Hirschfeld, Klaus, 58515 Lüdenscheid (DE)

(56) Entgegenhaltungen:
- EP-A- 0 919 436
- EP-A- 1 380 040
- FR-A- 2 796 201

## Beschreibung

Die Erfindung betrifft eine elektrische Schalteinrichtung gemäß dem Oberbegriff des Anspruchs 1.

Derartige elektrische Schalteinrichtungen werden beispielsweise im Automobilbereich als Lenkstockschalter eingesetzt. Der Schalthebel, an dessen freiem Ende die Dreh-Schub-Schaltergruppe angeordnet ist, ist seinerseits schwenkbar gelagert. Bei dem Schalthebel kann es sich beispielsweise um den Blinkerschalter des Kraftfahrzeugs handeln.

Eine elektrische Schalteinrichtung mit den oben genannten Merkmalen ist aus der DE 197 23 482 C1 bekannt. Die Dreh-Schub-Schaltergruppe dieser vorbekannten Schalteinrichtung umfasst einen vorbekannten Drehschalter, dessen Betätigungselement eine das freie Ende der Dreh-Schub-Schaltergruppe bildende Kappe darstellt. Durch Drehen derselben um ihre Längsachse können unterschiedliche Schaltpositionen erreicht werden. Weitere Schaltfunktionen können durch Beaufschlagen der Dreh-Schub-Schaltergruppe mit einer zum Schalthebel hingerichteten Schubkraft erreicht werden, wobei die Schubschalteranordnung als Taster ausgebildet ist. Der Drehschalter sowie der Schubschalter dieser Dreh-Schub-Schaltergruppe verfügen über jeweils durch ein Betätigungselement betätigbare bewegliche elektrische Kontaktelemente, die sich auf einer ortsfest angeordneten Leiterbahnstruktur abstützen. Teil dieser Leiterbahnstruktur sind die notwendigen ortsfesten elektrischen Kontaktflächen. Die beweglichen Kontaktelemente sind in jeweils einem Schlitten gehalten, die durch eine Bewegung des jeweiligen Betätigungselementes bewegt werden. Die Bewegungsrichtung der Schlitten verläuft in Längserstreckung der Dreh-Schub-Schaltergruppe. Damit der für den Drehschalter vorgesehene und die beweglichen Kontaktelemente tragende Schlitten in dieser Richtung bei einer drehenden Bewegung der endseitigen Betätigungskappe bewegt werden kann, muss die rotatorische Bewegung des Betätigungselementes in eine translatorische Bewegung zum Antreiben des Schlittens umgesetzt werden. Zu diesem Zweck ist ein Funktionselement mit einer Steuerbahn vorgesehen, in die ein Steuerzapfen des die beweglichen Kontaktelemente tragenden Schlittens eingreift. Das Funktionselement ist schubentkoppelt bezüglich der Betätigungskappe des Drehschalters, jedoch drehmomentschlüssig mit dieser Kappe verbunden.

Die die ortsfesten elektrischen Kontaktflächen umfassende Leiterbahnstruktur ist Teil einer starren Platine, die über einen Anschlusskabelsatz kontaktiert ist. Die Platine ist von einem Tragekörper gehalten, der dreh- und schubfest auf dem freien Ende des Hebelarmes befestigt ist.

Die die beweglichen elektrischen Kontaktelemente tragenden Schlitten der beiden Schalter dieser Dreh-Schub-Schaltergruppe sind in axialer Richtung hintereinander befindlich angeordnet. Dies erfolgt vornehmlich vor dem Hintergrund, dass bei einer anders konzipierten Ausgestaltung der Durchmesser der Dreh-Schub-Schaltergruppe zu groß werden würde. Die axiale Erstreckung der Dreh-Schub-Schaltergruppe ist somit mitbestimmt durch die Anzahl der die beweglichen elektrischen Kontaktelemente tragenden Schlitten. Bei einer höheren Funktionsdichte, als in DE 197 23 482 C1 beschrieben, beispielsweise bei einer Ausgestaltung einer Dreh-Schub-Schaltergruppe mit zwei oder mehr Drehschaltern, würde sich die axiale Erstreckung der aus dem genannten Dokument beschriebenen Schalteinrichtung verlängern. Somit ist einer Erhöhung der Funktionsdichte dieser vorbekannten Schalteinrichtung insbesondere im Hinblick auf eine größere Anzahl an Drehschaltern Grenzen aufgezeigt, wenn gleichzeitig eine Durchmesservergrößerung der Dreh-Schub-Schaltergruppe nicht angestrebt ist.

Aus DE 195 38 767 A1 ist eine weitere elektrische Schalteinrichtung, konzipiert als Lenkstockschalter bekannt. Diese Schalteinrichtung umfasst im Gegensatz zum Gegenstand der DE 197 23 482 C1 jedoch nur einen Schubschalter und keine Dreh-Schub-Schaltergruppe. Der Schubschalter dieses Dokumentes ist prinzipiell ähnlich aufgebaut wie der in dem zuvor genannten Dokument beschriebene. Im Gegensatz zu der zuvor beschriebenen Schalteinrichtung sind die ortsfesten elektrischen Kontaktelemente Teil einer flexiblen Leiterfolie, die im Bereich der durch die beweglichen Kontaktelemente erfolgenden Kontaktierung durch einen Tragekörper unterstützt ist, damit für die beweglichen Kontaktelemente ein ausreichendes Widerlager gegeben ist. Die Bewegungsrichtung der beweglichen Kontaktelemente gegenüber der ortsfest gehaltenen Leiterfolie liegt ebenfalls in Längsrichtung der Schalteinrichtung.

Der Erfindung liegt nunmehr die Aufgabe zugrunde, eine elektrische Schalteinrichtung mit einer Dreh-Schub-Schaltergruppe wie zum Beispiel aus EP-A-0 919 436 bekannt, weiterzubilden, dass die Dreh-Schub-Schaltergruppe zur Erhöhung der Funktionsdichte nicht nur mit einer größeren Anzahl an Drehschaltern ausgestattet werden kann, ohne die gewünschte Länge der Dreh-Schub-Schaltergruppe gegenüber der vorbekannten Ausgestaltung über Maßen verlängern zu müssen, sondern bei der sich der oder die eingesetzten Schalter mit weniger Betätigungsteilen realisieren lassen.

Diese Aufgabe wird erfindungsgemäß dadurch die kennzeichenden Merkmale des Anspruchs 1.

Bei dieser Schalteinrichtung befindet sich die Ebene der ortsfest angeordneten Kontaktelemente im Gegensatz zum vorbekannten Stand der Technik in Querrichtung zur Längserstreckung der Dreh-Schub-Schaltergruppe verlaufend und somit in Querrichtung zur Drehachse des Betätigungselementes des zumindest einen Drehschalters. Die beweglichen Kontaktelemente des Drehschalters werden somit auf einer zur Drehachse des Betätigungselementes konzentrischen Bewegungsbahn geführt . Aus diesem Grunde ist der benötigte axiale Bauraum gegenüber vorbekannten Schalteinrichtungen reduziert; insbesondere können mehrere, beispielsweise zwei Drehschalter, axial hintereinanderliegend angeordnet sein, ohne die Gesamtlänge der Dreh-Schub-Schaltergruppe über Maßen erhöhen zu müssen. Vorteilhaft an dieser Ausgestaltung ist ferner, dass die beweglichen Kontaktelemente des oder der Drehschalter ohne Bewegungsumset-zung von den Betätigungselementen bewegt werden können. Zu diesem Zweck ist den beweglichen Kontaktelementen der eingesetzten Drehschalter jeweils ein Schleifkörper zugeordnet, der drehmomentschlüssig, jedoch schubentkoppelt, an eine Bewegung seines jeweiligen Betätigungselementes gekoppelt ist. Der Schleifkörper kann beispielsweise ein Kunststoffkörper sein, an dem die beweglichen Kontaktelemente angeordnet sind. Grundsätzlich können die beweglichen Kontaktelemente dergestalt ausgebildet sein, dass diesen ebenfalls die Funktion des beschriebenen Schleifkörpers zukommt. Eine solche drehmomentschlüssige, jedoch schubentkoppelte kinematische Verbindung mit einem Betätigungselement kann beispielsweise durch eine dem Schleifkörper zugeordnete, sich parallel zur Drehachse erstreckende Gabel realisiert sein, in die ein Mitnehmer, beispielsweise als Zapfen oder Steg ausgebildet, des Betätigungselementes eingreift. Der Mitnehmer ist in axialer Richtung zumindest über den Bewegungsbetrag des Schubschalters frei in der Gabel bewegbar, so dass eine Schubbewegung des Betätigungselements nicht auf den Schleifkörper übertragen wird.

Die die ortsfesten elektrischen Kontaktflächen aufweisende Leiterbahnstruktur für jeden Drehschalter ist zweckmäßigerweise ein Abschnitt eines flexiblen Folienleiters, durch den die gesamte notwendige elektrische Verdrahtung einschließlich der Anschlussverbindungen realisiert ist. Die flexiblen Eigenschaften eines solchen Folienleiters werden zur Anordnung der in Querrichtung zur Längserstreckung der Dreh-Schub-Schaltergruppe verlaufenden Ebene der ortsfesten elektrischen Kontaktflächen ausgenutzt, da diese ohne weiteres durch Falten oder Biegen in die gewünschte räumliche Anordnung der ortsfesten Kontaktflächen gebracht werden können, ohne dass zu diesem Zweck mehrere unabhängige einzelne Leiterbahnstrukturen elektrisch eigens miteinander in Verbindung gebracht werden müssten. Im Bereich der ortsfesten elektrischen Kontaktflächen ist ein solcher flexibler Folienleiter durch den Tragekörper unterstützt, der in diesen Bereichen jeweils einen Anlagebock oder dgl. zur Verfügung stellt. Bei einer Realisierung von beispielsweise zwei Drehschaltern, kann ein in Querrichtung zur Längserstreckung der Dreh-Schub-Schaltergruppe angeordneter Anlagebock genutzt werden, um an seinen beiden in axiale Richtungen weisenden Stirnseiten jeweils einen Abschnitt eines solchen Folienleiters mit den ortsfesten elektrischen Kontaktflächen anzuordnen und daran zu befestigen.

Insbesondere bei Einsatz eines flexiblen Folienleiters kann ohne Mehraufwand die Schubschalter-Anordnung im Bereich des zum Schalthebel weisenden Endes der Dreh-Schub-Schaltergruppe angeordnet sein, so dass im äußeren Bereich der Dreh-Schub-Schaltergruppe weiterer Raum zum Anordnen von Drehschaltern vorhanden ist.

In einer zweckmäßigen Ausgestaltung ist vorgesehen, dass der einem Drehschalter zugeordnete Schleifkörper an dem Tragekörper axial gelagert ist. Zur Montage des Schleifkörpers an dem Tragekörper verfügt dieser zweckmäßigerweise über eine radiale Montageöffnung bzw. Einstecköffnung, die in eine axiale Lageröffnung mündet. Somit kann der Schleifkörper radial auf die vorgesehene Achse des Tragekörpers aufgesteckt werden. Zweckmäßigerweise ist die Lageröffnung des Schleifkörpers dergestalt ausgebildet, dass der Schleifkörper verrastet auf der Lagerachse des Tragekörpers gehalten ist.

Bei Vorsehen von zwei axial hintereinander angeordneten Drehschaltern in einer solchen Dreh-Schub-Schaltergruppe ist es zweckmäßig, diese durch einen drehmomententkoppelten Zwischenring voneinander zu trennen. Vorteilhafterweise verfügt ein solcher Zwischenring über in Schubrichtung wirkende Federmittel, damit die beiden angrenzenden Betätigungsringe der Drehschalter spielfrei angeordnet ist.

Nachfolgend ist die Erfindung anhand eines Ausführungsbeispiels unter Bezugnahme auf die beigefügten Figuren beschrieben. Es zeigen:
- **Fig. 1**: eine perspektivische Ansicht nach Art einer Explosionsdarstellung einer elektrischen Schalteinrichung mit einer DrehSchub-Schaltergruppe;
- **Fig. 2**: einen Längsschnitt durch die Schalteinrichtung der Figur 1 und
- **Fig. 3**: eine Seitenansicht eines Zwischenringes der Dreh-Schub-Schaltergruppe der Figur 1.

Eine als Lenkstockschalter für ein Kraftfahrzeug konzipierte elektrische Schalteinrichtung 1 umfasst eine insgesamt mit dem Bezugszeichen 2 bezeichnete Dreh-Schub-Schaltergruppe, die an dem freien Ende eines Schalthebels 3 angeordnet ist. Der Schalthebel 3 ist seinerseits schwenkbar gelagert, wobei durch die Schwenkbewegungen des Schalthebels 3 bestimmte Funktionen, beispielsweise die Blinkfunktionen geschaltet werden können.

Die Dreh-Schub-Schaltergruppe 2 umfasst zwei Drehschalter 4, 5 sowie einen Schubschalter 6.

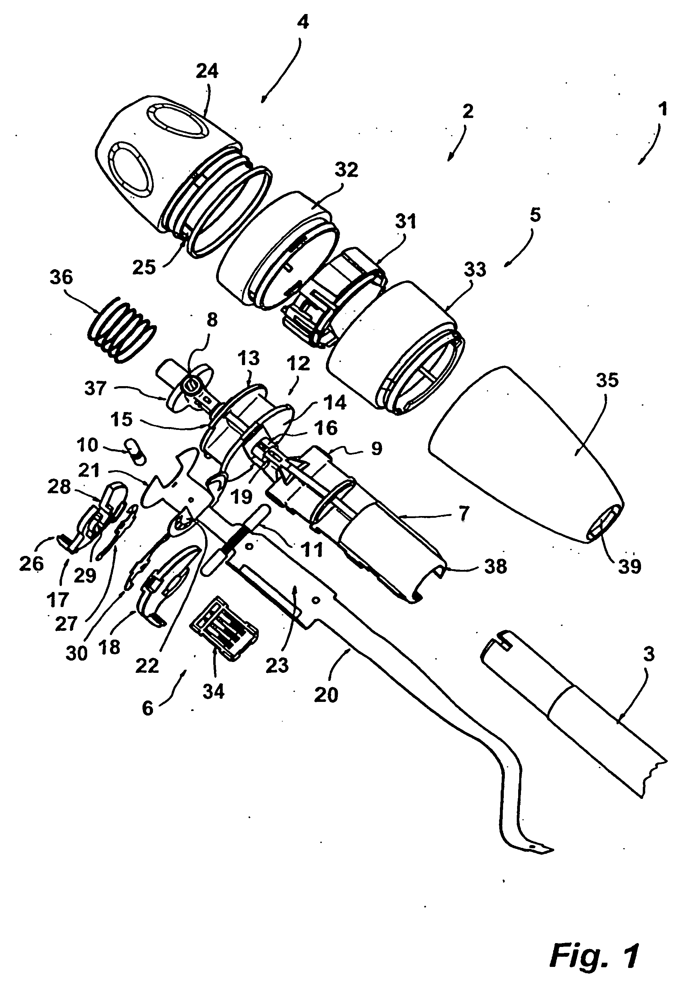

Auf das freie Ende des Schalthebels 3 drehmoment- und schubsteif aufgesetzt ist ein Tragekörper 7. Der Tragekörper 7 dient zum Halten der ortsfesten Teile zur Ausbildung der Schalter 4, 5, 6. Der Tragekörper 7 verfügt über Aufnahmen 8, 9 zum Einsetzen jeweils einer Rasthülsenbaugruppe 10, 11, die bei dem dargestellten Ausführungsbeispiel zum Bereitstellen der gewünschten Haptik dienen. Ferner umfasst der Tragekörper 7 einen Anlagebock 12 mit zwei einzelnen Anlagescheiben 13, 14. Teil des Tragekörpers 7 sind ferner zwei an die voneinander wegweisenden Seiten der Anlagescheiben 13, 14 grenzende Lagerabschnitte 15, 16, auf denen jeweils ein einem Drehschalter 4, 5 zugeordneter Schleifkörper 17, 18 drehbar gelagert ist. Die Lagerabschnitte 15, 16 sind an ihrem von der jeweiligen Anlagescheibe 13, 14 wegweisenden Ende durch einen Anschlag 19 (lediglich bezüglich des Lagerabschnittes 15 in Figur 1 erkennbar) begrenzt.

An dem Tragekörper 7 ist ein flexibler Folienleiter 20 befestigt. Teil des Folienleiters 20 sind Bereiche 21, 22, 23, in denen die ortsfesten Kontaktflächen zum Realisieren der Schalter 4, 5, 6 angeordnet sind. Der Folienleiter 20 ist dergestalt konzipiert, dass die Bereiche 21, 22 jeweils außenseitig an einer Anlagescheibe 13, 14 zur Anlage kommen und somit von diesen unterstützt sind. Die Bereiche 21, 22 des Folienleiters 20 sind an den Anlagescheiben 13 bzw. 14 befestigt gehalten, beispielsweise durch eine Klebeverbindung. Teil des Folienleiters 20 ist ebenfalls ein Anschlussabschnitt, mit denen die Dreh-Schub-Schaltergruppe elektrisch kontaktiert und an das Bordnetz angeschlossen ist.

Der Drehschalter 4 umfasst als Betätigungselement eine den äußeren Abschluss der Dreh-Schub-Schaltergruppe 2 bildende Betätigungskappe 24.

Die Betätigungskappe 24 ist drehbar gegenüber dem Tragekörper 7 gehalten. Die Betätigungskappe 24 trägt innenseitig eine Rastkurve, in die die Rasthülsenbaugruppe 10, gehalten in der Aufnahme 8 des Tragekörpers 7, eingreift, um für den Drehschalter 4 die gewünschte Haptik bereitzustellen. Radial zur Drehachse der Betätigungskappe 24 angeordnet und von dieser abragend ist ein Mitnehmer 25, ausgebildet als Steg, angeordnet, der in eine in axialer Richtung der Dreh-Schub-Schaltergruppe 2 offene Gabelaufnahme 26 des Schleifkörpers 17 eingreift. Dabei ist vorgesehen, dass die lichte Weite der Aufnahme 26 im wesentlichen der Breite des Mitnehmers 15 entspricht. Auf diese Weise ist der Mitnehmer 25 und somit die Betätigungskappe 24 in Längsrichtung der Dreh-Schub-Schaltergruppe 2 in der Gabelaufnahme 26 des Schleifkörpers 17 verschiebbar. Der Schleifkörper 17 ist dagegen durch dieses Ineingriffstellen des Mitnehmers 25 in die Gabelaufnahme 26 drehmomentschlüssig an eine Drehbewegung der Betätigungskappe 24 gekoppelt. Der Schleifkörper 17 trägt die beweglichen Kontaktelemente 27 des Drehschalters 4, die sich auf der Außenseite des Bereiches 21 mit den ortsfesten Kontaktflächen des Folienleiters 20 abstützen. Der Schleifkörper 17 weist eine radiale Einstecköffnung 28 auf, die in eine axiale hinterschnittene Lageröffnung 29 mündet. Eine Montage des Schleifkörpers 17 auf dem Lagerabschnitt 15 des Tragekörpers 7 erfolgt, mit dem den Lagerabschnitt 15 begrenzenden Anschlag zusammenwirkend, codiert und ist auf dem Lagerabschnitt 15 dergestalt gelagert, dass der Schleifkörper 17 auf dem Lagerabschnitt 15 in seinem zum Darstellen der gewünschten Schaltfunktionen des Drehschalters 4 notwendigen Drehbewegungsbereich an dem Anschlag anliegt.

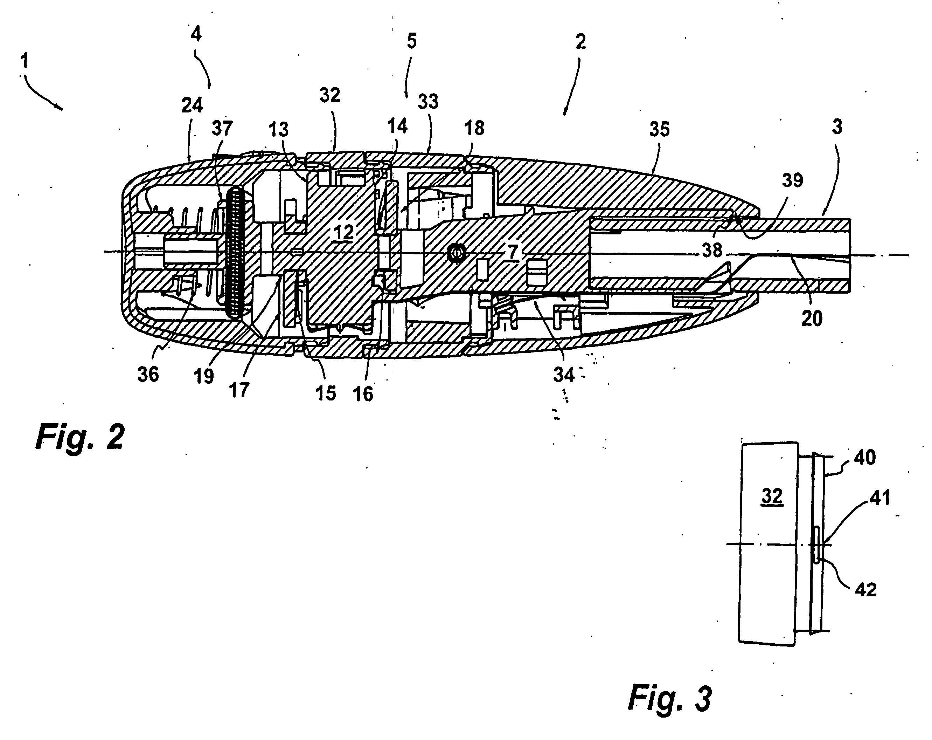

Der Drehschalter 5 ist prinzipiell gleich aufgebaut wie der Drehschalter 4 und steht ebenso wie dieser in der zu dem Drehschalter 4 beschriebenen Art und Weise mit seinem Schleifkörper 18 in Eingriff. Die beweglichen Kontaktelemente 30 des Schleifkörpers 18 stützen sich auf dem die ortsfesten Kontaktflächen tragenden Bereich 22 des Folienleiters 20 ab. Zur Bereitstellung einer Haptik ist - zusammenwirkend mit der Rasthülsenbaugruppe 11 - dem Drehschalter 5 ein Rastkurveneinsatz 31 zugeordnet, dessen Innenseite eine in Umfangsrichtung sowie in axialer Richtung wirkende Rastkurve aufweist. Durch den Rastkurveneinsatz 31 wird nicht nur die gewünschte Haptik für den Drehschalter 5 sondern auch die Haptik für den Schubschalter 6 bereitgestellt. Der Rastkurveneinsatz 31 ist eingesetzt in einen Zwischenring 32, der gegenüber der Betätigungskappe 24 des Drehschalter 4 und bezüglich des Betätigungsringes 33 des Drehschalters 5 drehentkoppelt ist. Der Zwischenring 32 weist an seiner zum Schalthebel 3 weisenden Stirnfläche federnde Mittel auf, um die beweglichen Betätigungselemente 24, 33 spielfrei gegeneinander zu halten. Der Zwischenring 32 ist bezüglich seiner federnden Mittel zu Figur 3 näher beschrieben.

Die Lagerung der Schleifkörper 17, 18 auf den Lagerabschnitten 15 bzw. 16 des Tragekörpers 7 ist in dem Längsschnitt der Figur 2 erkennbar, insbesondere deren radiale Lagerung.

Die beweglichen Kontaktelemente 34 des Schubschalters 6 sind von einer Endkappe 35 getragen, die drehentkoppelt benachbart zu dem Betätigungsring 33 des Drehschalters 5 angeordnet ist. Die beweglichen Kontaktelemente 34 des Schubschalters 6 stützen sich auf dem diesem Schalter 6 zugeordneten Bereich 23 des Folienleiters 20 ab, in dem die ortsfesten Kontaktflächen freiliegend angeordnet sind. In dem Bereich 23 des Folienleiters 20 liegt dieser an der Unterseite des Tragekörpers 7 an. Bewegt werden die beweglichen Kontaktelemente 34 des Schubschalters 6 durch Ausüben einer Schubbewegung auf die Betätigungskappe 24, durch die diese Bewegung auf den Zwischenring 32, den Betätigungsring 33 des Drehschalters 5 und schließlich an die Endkappe 35 übertragen wird. Grundsätzlich kann eine solche Schubbewegung auch durch Ergreifen der gesamten Dreh-Schub-Schaltergruppe 2 und einer Bewegung zum Schalthebel 3 hin erfolgen. Eine Rückstellung des Schubschalters 6 kann durch entsprechende Ausgestaltung der Rastkurve des Rastkurveneinsatzes 31 erfolgen, so dass eine Rückstellung letztendlich aufgrund der durch die in diese Rastkurve eingreifenden Rasthülsenbaugruppe 11 bereitgestellten Federkraft erfolgen kann. Zur Unterstützung einer Rückstellbewegung der beweglichen Elemente des Schubschalters 6 dient bei dem dargestellten Ausführungsbeispiel auch eine Druckfeder 36. Die Druckfeder 36 stützt sich zum einen an einem hinteren Flansch 37 des Tragekörpers 7 und andererseits an der Innenseite der Betätigungskappe 24 des Drehschalters 4 ab. Die Druckfeder 36 dient ferner dem Zweck, die beweglichen Elemente 24, 32, 33, 35 spielfrei zueinander zu halten. Als Gegenlager dient für diesen Zweck eine Anschlaganordnung, die zum einen aus der zum Schalthebel 3 weisenden Stirnfläche 38 des Tragekörpers 7 und zum anderen durch einen an der Innenseite der Endkappe 35 angeordneten Absatz 39 gebildet ist.

Zur spielfreien Anordnung der einzelnen beweglichen Elemente zueinander dienen auch die zuvor genannten Federmittel des Zwischenringes 32. Der Zwischenring 32 trägt - wie in Figur 3 erkennbar - an seiner zu dem Schalthebel 3 weisenden Stirnfläche 40 zwei zur Längsachse des Zwischenringes 32 diametral einander gegenüberliegende Fortsätze 41. Hinter den Fortsätzen 41 befindet sich jeweils eine der Umfangsfläche folgend angeordnete, langlochartig ausgebildete Federöffnung 42. Durch die Federöffnung 42 und den Fortsatz 41 besteht somit die Möglichkeit, dass die Fortsätze 41 aufgrund der materialelastischen Eigenschaften zur Erstellung des Zwischenringes 32 verwendeten Kunststoffes in die Federöffnung 42 einfedern können. Die Fortsätze 41 stützen sich stirnseitig an der Innenseite des Betätigungsringes 33 des Drehschalters 5, unter einer geringen Vorspannung stehend, ab.

Die einzelnen beweglichen Elemente 24, 32, 33, 35 sind durch Rastverbindungen miteinander verbunden.

### Bezugszeichenliste

- 1: Schalteinrichtung
- 2: Dreh-Schub-Schaltergruppe
- 3: Schalthebel
- 4: Drehschalter
- 5: Drehschalter
- 6: Schubschalter
- 7: Tragekörper
- 8: Aufnahme
- 9: Aufnahme
- 10: Rasthülsenbaugruppe
- 11: Rasthülsenbaugruppe
- 12: Anlagebock
- 13: Anlagescheibe
- 14: Anlagescheibe
- 15: Lagerabschnitt
- 16: Lagerabschnitt
- 17: Schleifkörper
- 18: Schleifkörper
- 19: Anschlag
- 20: Folienleiter
- 21: Bereich des Folienleiters
- 22: Bereich des Folienleiters
- 23: Bereich des Folienleiters
- 24: Betätigungskappe
- 25: Mitnehmer
- 26: Gabelaufnahme
- 27: bewegliches Kontaktelement
- 28: Einstecköffnung
- 29: Lageröffnung
- 30: bewegliche Kontaktelemente
- 31: Rastkurveneinsatz
- 32: Zwischenring
- 33: Betätigungsring
- 34: bewegliche Kontaktelemente
- 35: Endkappe
- 36: Druckfeder
- 37: Flansch
- 38: Stirnfläche
- 39: Absatz
- 40: Stirnfläche
- 41: Fortsatz
- 42: Federöffnung

## Patentansprüche

1. Elektrische Schalteinrichtung mit einer an dem freien Ende eines Schalthebels (3) angeordneten Dreh-Schub-Schaltergruppe (2), umfassend zumindest einen Drehschalter (4, 5) sowie einen durch eine Schubbewegung gegenüber dem Schalthebel (3) betätigbaren Schalter (6), wobei der zumindest eine Drehschalter (4, 5) und der Schubschalter (6) jeweils durch ein Betätigungselement (24, 33, 35) betätigbare bewegliche Kontaktelemente (27, 30, 34) aufweisen, die sich auf einer ortsfesten, von einem Tragekörper (7) gehaltenen Leiterbahnstruktur mit dementsprechend ortsfesten elektrischen Kontaktflächen abstützen, wobei die Ebene der ortsfest angeordneten Kontaktelemente des zumindest einen Drehschalters (4, 5) in Querrichtung zur Längserstreckung der Dreh-Schub-Schaltergruppe (2) verlaufend angeordnet ist und **dadurch gekennzeichnet dass** diesem Drehschalter (4, 5) ein drehmomentschlüssig, jedoch schubentkoppelt an eine Bewegung seines Betätigungselements (24, 33) gekoppelter Schleifkörper mit den beweglichen Kontaktelementen (27, 30) zugeordnet ist (17, 18).

2. Schalteinrichtung nach Anspruch 1, **dadurch gekennzeichnet, dass** der Schleifkörper (17, 18) an dem ortsfest angeordneten, die ortsfesten Kontaktflächen tragenden Tragekörper (7) axial gelagert ist.

3. Schalteinrichtung nach Anspruch 2, **dadurch gekennzeichnet, dass** zur Schubentkopplung zwischen dem Betätigungselement (24, 33) des zumindest einen Drehschalters (4, 5) und seinem Schleifkörper (17, 18) das eine Element - Betätigungselement oder Schleifkörper (17, 18) - über eine in Richtung der Schubbewegung des Betätigungselements (24, 33) offene Gabelaufnahme (26) verfügt, in die ein dem anderen Element - Schleifkörper oder Betätigungselement (24, 33) - zugeordneter Mitnehmer (25) eingreift.

4. Schalteinrichtung nach Anspruch 3, **dadurch gekennzeichnet, dass** der Schleifkörper (17, 18) durch eine Trägerscheibe, an der das oder die beweglichen, elektrisch leitenden Kontaktelemente (27, 30) gehalten sind, gebildet ist.

5. Schalteinrichtung nach einem der Ansprüche 1 bis 4, **dadurch gekennzeichnet, dass** die Dreh-Schub-Schaltergruppe (2) zwei in Längserstreckung der Dreh-Schub-Schaltergruppe (2) axial hintereinander angeordnete Drehschalter (4, 5) aufweist, deren Betätigungselemente (24, 33) durch einen gegenüber den Drehbewegungen der Betätigungselemente (24, 33) der Drehschalter (4, 5) drehmomententkoppelten Zwischenring (32) voneinander getrennt sind und dieser Zwischenring (32) über in Schubrichtung wirkende Federmittel (41, 42) verfügt.

6. Schalteinrichtung nach Anspruch 5, **dadurch gekennzeichnet, dass** die Federmittel des Zwischenringes (32) durch zumindest zwei, von einer Stirnfläche (40) axial abragende, vor einer in den Zwischenring (32) eingebrachten Federöffnung (42) angeordnete Fortsätze (41) gebildet sind, die sich an dem benachbart zu dem Zwischenring (32) angeordneten Betätigungselement (33) abstützen.

7. Schalteinrichtung nach einem der Ansprüche 1 bis 6, **dadurch gekennzeichnet, dass** die stirnseitige, zum Schalthebel (3) weisende Fläche (38) des Tragekörpers (7) eine Anschlagfläche zum Begrenzen der axialen Bewegbarkeit der Dreh-Schub-Schaltergruppe (2) in der von dem Schalthebel (3) wegweisenden Richtung darstellt.

8. Schalteinrichtung nach einem der Ansprüche 5 bis 7, **dadurch gekennzeichnet, dass** der Tragekörper (7) einen sich quer zur Längserstreckung der Dreh-Schub-Schaltergruppe (2) erstreckenden Anlagebock (12) umfasst, an dessen beiden, in axiale Richtung weisende Stirnflächen die ortsfesten Kontaktflächen der Drehschalter (4, 5) angeordnet sind.

9. Schalteinrichtung nach einem der Ansprüche 1 bis 8, **dadurch gekennzeichnet, dass** die ortsfesten Kontaktflächen der einzelnen Schalter (4, 5, 6) der Dreh-Schub-Schaltergruppe (2) Teil eines flexiblen, von dem Tragekörper (7) zumindest im Bereich (21, 22, 23) dieser Kontaktflächen unterstützten Folienleiters (20) sind.

## Claims

1. Electrical switching facility with a rotary-push switch group (2) arranged on the free end of a switch lever (3) and comprising at least one rotary switch (4, 5) and a switch (6) that can be actuated by a pushing motion in relation to the switch lever (3), with the at least one rotary switch (4, 5) and the push switch (6) each featuring movable contact elements (27, 30, 34) that can be operated by an actuating element (24, 33, 35), respectively, and are supported on a stationary printed conductor structure that is held by a supporting member (7) and has corresponding stationary electrical contacting areas, with the level of the fixed contact elements of the at least one rotary switch (4, 5) being arranged crosswise to the longitudinal span of the rotary-push switch group (2) and **characterised by the fact** that a wiper element (17, 18) with the movable contact elements (27, 30) is assigned to this rotary switch (4, 5) and coupled to a movement of its actuating element (24, 33) in a torque-keyed though thrust-decoupled manner.

2. Switching facility in accordance with Claim 1, **characterised by the fact** that the wiper element (17, 18) is axially supported on the supporting member (7) that bears the stationary contact areas and is arranged in a fixed fashion.

3. Switching facility in accordance with Claim 2, **characterised by the fact** that the one element - actuating element or wiper element (17, 18) - has an fork fixture (26) that is open in the direction of the pushing motion of the actuating element (24, 33) and into which a driver (25) assigned to the other element - wiper element or actuating element (24, 33) - engages for the purpose of effecting a decoupling of thrust between the actuating element (24, 33) of the at least one rotary switch (4, 5) and its wiper element (17, 18).

4. Switching facility in accordance with Claim 3, **characterised by the fact** that the wiper element (17, 18) is constituted by a supporting disk on which the movable, electrically conductive contact element or elements (27, 30) are held.

5. Switching facility in accordance with any of Claims 1 to 4, **characterised by** the fact that the rotary-push switch group (2) features two rotary switches (4, 5) that are arranged axially behind each other in the longitudinal extension of the rotary-push switch group (2) and whose actuating elements (24, 33) are separated from each other by an intermediate ring (32) that is decoupled from the torque in relation to the rotary movements of the actuating elements (24, 33) of the rotary switch (4, 5) and that this intermediate ring (32) has spring constituents (41, 42) that act in the direction of pushing.

6. Switching facility in accordance with Claim 5, **characterised by the fact** that the spring constituents of the intermediate ring (32) are formed by at least two appendages (41) that project axially from a front face (40) and are arranged in front of a spring opening (42) built into the intermediate ring (32) and are supported on the actuating element (33) arranged adjacent to the intermediate ring (32).

7. Switching facility in accordance with any of Claims 1 to 6, **characterised by the fact** that the end face (38) of the supporting member (7) facing the switch lever (3) represents a stopping face to limit the axial mobility of the rotary-push switch group (2) in the direction facing away from the switch lever (3).

8. Switching facility in accordance with any of Claims 5 to 7, **characterised by the fact** that the supporting member (7) comprises a contact support (12) that extends crosswise to the longitudinal span of the rotary-push switch group (2), with the stationary contact areas of the rotary switch (4, 5) arranged on the two ends of the same that face in the axial direction.

9. Switching facility in accordance with any of Claims 1 to 8, **characterised by the fact that** the stationary contact areas of the individual switches (4, 5, 6) of the rotary-push switch group (2) are part of a flexible foil conductor (20) that is supported at least in the section (21, 22, 23) of these contact areas by the supporting member (7).

## Revendications

1. Installation de commutation électrique avec un groupe de commutateurs rotatifs /à poussée (2), disposé à l'extrémité libre d'un levier de commutation (3), comprenant au moins un commutateur rotatif (4, 5) ainsi qu'un commutateur (6) pouvant être actionné par un mouvement de poussée par rapport au levier de commutation (3), le commutateur rotatif (4, 5) au moins prévu et le commutateur à poussée (6) présentant des éléments de contact (27, 30, 34) mobiles, pouvant être actionnés chacun par un élément d'actionnement (24, 33, 35), lesquels s'appuient sur une structure de pistes conductrices, fixe, maintenue par un corps de support (7), avec des surfaces de contact électrique adéquatement fixes, le plan des éléments de contact fixes du commutateur rotatif (4, 5) au moins prévu, étant orienté perpendiculairement à l'étendue longitudinale du groupe de commutateurs rotatifs /à poussée (2) et **caractérisé en ce que**, à ce commutateur rotatif (4, 5), est associé un balai (17, 18) solidaire en rotation mais désaccouplé en poussée par rapport à un mouvement de son élément d'actionnement (24, 33), avec les éléments de contact mobiles (27, 30).

2. Installation de commutation selon la revendication 1, **caractérisée en ce que** le balai (17, 18) est monté axialement au corps de support (7) agencé de manière fixe, qui porte les surfaces de contact fixes.

3. Installation de commutation selon la revendication 2, **caractérisé en ce que** le désaccouplement en poussée entre l'élément d'actionnement (24, 33) du commutateur rotatif (4, 5) au moins prévu et son balai (17, 18), l'un des éléments - élément d'actionnement ou balai (17, 18) - dispose d'un réceptacle fourchu (26) ouvert dans la direction du mouvement de poussée de l'élément d'actionnement (24, 33), dans lequel s'engage un entraîneur (25) associé à l'autre élément - balai ou élément d'actionnement (24, 33).

4. Installation de commutation selon la revendication 3, **caractérisé en ce que** le balai est formé par une plaque de support à laquelle l'élément ou les éléments de contact conducteurs d'électricité mobiles (27, 30) sont maintenus.

5. Installation de commutation électrique selon l'une des revendications 1 à 4, **caractérisée en ce que** le groupe de commutateurs rotatif / à poussée (2) présente deux commutateurs rotatifs (4, 5), disposés l'un derrière l'autre axialement, dans la direction longitudinale dudit groupe de commutateurs rotatifs / à poussée (2), dont les éléments d'actionnement (24, 33) sont séparés l'un de l'autre par une bague intermédiaire (32) désaccouplée en rotation par rapport aux mouvements de rotation des éléments d'actionnement (24, 33) des commutateurs rotatifs (4, 5), et **en ce que** cette bague intermédiaire (32) dispose de moyens faisant ressort (41, 42) qui agissent dans la direction de la poussée.

6. Installation de commutation selon la revendication 5, **caractérisée en ce que** les moyens faisant ressort de la bague intermédiaire (32) sont formés par au moins deux prolongements (41) en saillie d'une surface frontale (40), dans le sens axial, qui sont disposés devant une ouverture (42), pratiquée dans la bague intermédiaire (32), lesquels prolongements s'appuient sur l'élément d'actionnement (33) voisin de la bague intermédiaire (32).

7. Installation de commutation selon l'une des revendications 1 à 6, **caractérisée en ce que** la surface (38) du corps de support (7), orientée, sur le côté frontal, vers le levier de commutation (3), représente une surface de butée pour la limitation de la mobilité axiale du groupe de commutateurs rotatifs / à poussée (2) dans la direction opposée au levier de commutation (3).

8. Installation de commutation selon l'une des revendications 5 à 7, **caractérisée en ce que**, le corps de support (7) comprend une butée (12) s'étendant perpendiculairement à l'étendue longitudinale du groupe de commutateurs rotatifs / de poussée (2), sur les deux surfaces frontales, orientées dans la direction axiale, duquel les surfaces de contact fixes des commutateurs rotatifs (4, 5) sont agencées.

9. Installation de commutation selon l'une des revendications 1 à 8, **caractérisée en ce que** les surfaces de contact fixes des différents commutateurs (4, 5, 6) du groupe de commutateurs rotatifs / à poussée (2) font partie d'un conducteur pelliculaire (20) flexible, soutenu par le corps de support (7), au moins dans la région (21, 22, 23) de ces surfaces de contact.
